**Europäisches Patentamt**

(19) **European Patent Office**

**Office européen des brevets**

(11) Numéro de publication: **0 100 697**
**B1**

(12) # FASCICULE DE BREVET EUROPEEN

(45) Date de publication du fascicule du brevet:
**11.09.85**

(51) Int. Cl.⁴: **F 02 K 1/12**

(21) Numéro de dépôt: **83401290.8**

(22) Date de dépôt: **22.06.83**

(54) Volet de tuyère à structure composite carbone et acier.

(30) Priorité: **28.06.82 FR 8211269**

(43) Date de publication de la demande:
**15.02.84 Bulletin 84/7**

(45) Mention de la délivrance du brevet:
**11.09.85 Bulletin 85/37**

(84) Etats contractants désignés:
**DE FR GB SE**

(56) Documents cités:
**FR - A - 1 433 712**
**FR - A - 2 130 102**
**FR - A - 2 145 362**
**US - A - 2 990 029**
**US - A - 3 820 720**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Jourdain, Gérard Ernest André, 4, Residence l'Arcadie Saintry S/Seine, F-91100 Corbeil Essonnes (FR)**
Inventeur: **Soligny, Marcel, Robert, 136 Boulevard Jean Mermoz, F-94150 Chevilly-Larue (FR)**

(74) Mandataire: **Moinat, François, S.N.E.C.M.A. Service des Brevets Boîte Postale 81, F-91003 Evry Cedex (FR)**

## Description

L'invention concerne un volet pour tuyère d'éjection à section variable comportant un corps central et une semelle.

Les volets de tuyère à section variable présentent généralement un corps métallique dans lequel ou sur lequel sont fixés des dispositifs permettant l'actionnement du volet, et une semelle en acier qui protège le corps des gaz d'éjection et assure l'étanchéité avec les volets adjacents. La semelle porte longitudinalement une protubérance de forme triangulaire qui permet de rétablir le profil aérodynamique avec les volets adjacents, et sert également au refroidissement.

La nécessité d'alléger les structures conduit à remplacer au moins partiellement des composants de la tuyère généralement en acier par des matériaux plus légers, telles des structures de type sandwich ou nid d'abeilles. Il se pose alors le problème de la liaison entre deux matériaux ayant des coefficients de dilatation différents et soumis à des températures différentes. Le brevet français 2 397 534 montre un joint entre l'extrémité aval de volets divergents, soumis au flux d'air chaud du moteur, et l'extrémité aval des volets extérieurs qui sont soumis à la température ambiante extérieure. Le joint comprend au moins une fente allongée, dont l'axe est approximativement parallèle à une directrice du volet divergent, dans laquelle un pivot est susceptible de se déplacer longitudinalement, la fente et le pivot étant fixés chacun sur un volet. Aucune indication ne permet de connaître le mode de fixation des bords longitudinaux des volets.

Ce dispositif a surtout pour but de permettre le déplacement relatif du volet divergent par rapport au volet extérieur lors des modifications d'orientation de l'ensemble volets convergent divergent, la distance séparant l'extrémité amont du volet convergent de l'extrémité aval du volet divergent étant variable selon le profil réalisé.

Le volet de tuyère selon l'invention telle que revendiquée comporte de préférence un corps en composite carbone-carbone et une semelle en acier, la semelle étant fixée au corps par des moyens permettant la libre dilatation des éléments. Ces moyens permettent d'une façon générale la liaison d'éléments de volets présentant des coefficients de dilatation différents ou soumis à des températures différentes.

Les explications et figures données ci-après à titre d'exemple permettront de comprendre comment l'invention peut être réalisée.

La figure 1 est une vue de dessus en perspective d'un volet selon une forme de réalisation de l'invention.

La figure 2 est une vue de dessus en perspective d'une première partie du corps central.

La figure 3 est une vue de dessus en perspective d'une deuxième partie du corps central.

La figure 4 est une vue de dessus en perspective de la semelle du volet.

La figure 5 est ne vue en coupe à plus grande échelle selon V V de la figure 1.

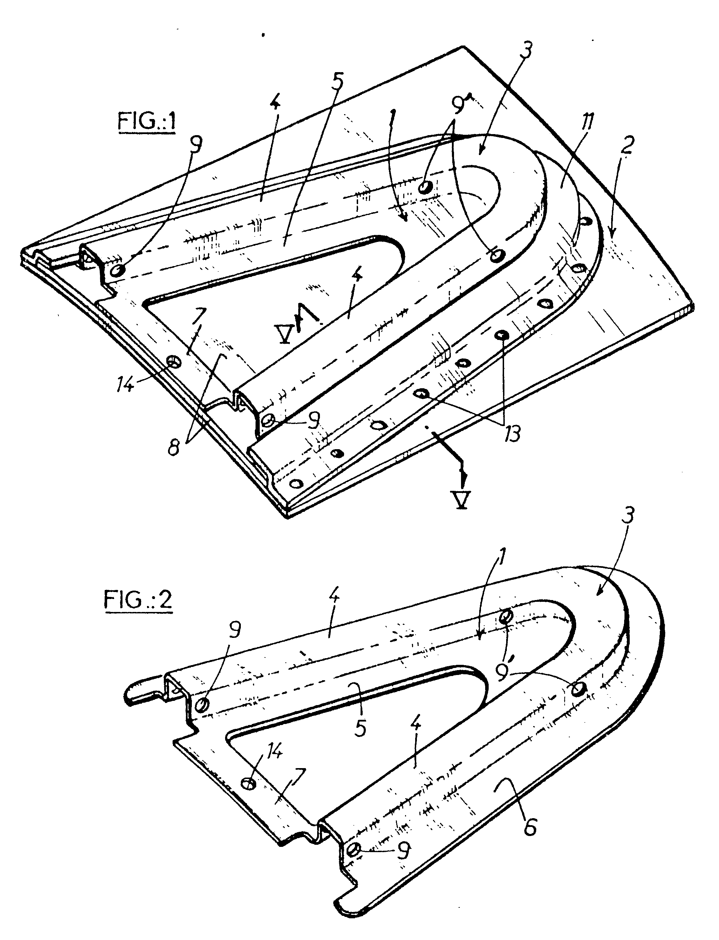

Selon la forme de réalisation de l'invention représentée figure 1, le volet de tuyère d'éjection à section variable est composé d'au moins deux parties: un corps central 1 et une semelle 2.

Le corps central (figure 2) est composé d'au moins deux éléments:

- une armature 3 ayant, vue de dessus, la forme d'un triangle isocèle à sommet arrondi; les côtés égaux 4 du triangle ont une section approximativement en forme de U dont l'extrémité de chacune des branches est prolongée perpendiculairement par un segment de droite; le prolongement 5 forme par rapport au U un rebord intérieur et le prolongement 6 un rebord extérieur; les deux rebords sont sur la même surface courbe que le pontet 7 formant la base du triangle, cette surface ayant par exemple, dans le plan transversal amont de la couronne de volets un rayon de courbure correspondant au rayon du canal précédant la tuyère;

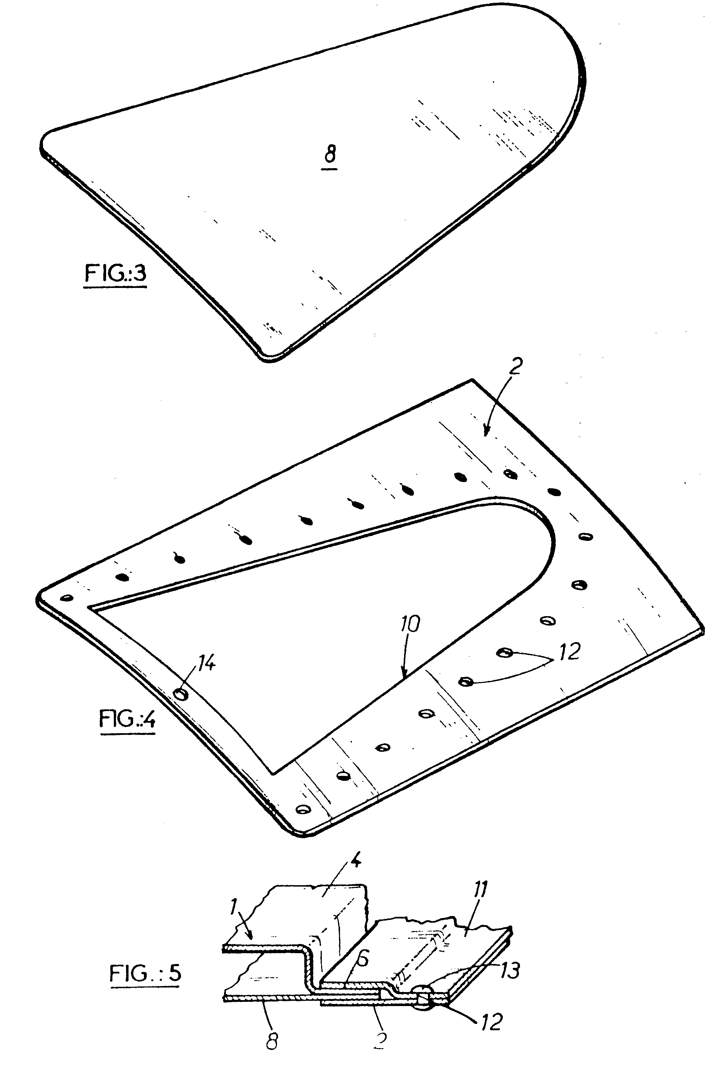

- un couvercle 8 (figure 3) ayant la forme et les dimensions extérieures de la projection plane de l'armature en U et de son rebord 6 et qui est fixé, par exemple par collage, sur les rebords 5 et 6 et sur le pontet 7 pour former un caisson rigide.

Des ouvertures 9, coaxiales, prévues à l'amont dans les côtés latéraux de l'armature, reçoivent des douilles métalliques destinées aux axes d'articulation du volet et des ouvertures coaxiales analogues 9', plus en aval, reçoivent également des douilles pour les dispositif de commande de mouvement.

La semelle 2 (figure 4) est constituée d'une pièce métallique rectangulaire, courbée longitudinalement selon un rayon de courbure correspondant au rayon de la tuyère. Une ouverture triangulaire 10 de contour correspondant au profil des ailes externes 4 de l'armature 3 du corps central 1, est prévue dans l'axe de la pièce.

Des moyens de fixation constitués d'un profil 11, métallique, de forme analogue au profil de l'ouverture, coopèrent avec la semelle pour serrer le bord du corps central. Selon la forme de réalisation montrée figure 5, le profilé présente en section deux branches parallèles, décalées l'une par rapport à l'autre, reliées à leurs extrémités voisines par une branche transversale, par exemple, perpendiculaire. Des perçages 12 sont prévus dans le bord du contour de l'ouverture et dans le profilé pour recevoir, par exemple, des rivets de fixation 13.

Le serrage contrôlé des bords du corps central en matériau composite par le profilé 11 sur la lamelle 2 en acier, permet aux dilatations différentes de ces deux ensembles de s'exercer sans créer de contraintes nuisibles.

Il est toutefois prévu une fixation 14, dans l'axe de symétrie, entre le pontet 7 du corps central et la semelle 2, de manière à éviter d'éventuels glissements pouvant se produire à certaines températures. La fixation est, par exemple, assurée par un rivet.

L'avantage d'un gain de masse sensible obtenu par l'utilisation de volets conformes à l'invention tout en répondant aux différentes conditions imposées pour une tuyère d'éjection est particulièrement appréciable dans le cas où il s'agit des volets extérieures de tuyère, encore appelés »volets froids«.

Le mode de réalisation d'un volet conformément à l'invention convient également lorsque les constituants sont en un même matériau, mais soumis à des températures différentes ayant pour conséquence des variations dimensionelles risquant de donner naissance à des contraintes inadmissibles.

Il semblerait que l'emploi d'éléments uniquement en matériau composite par exemple carbone-carbone pour la réalisation de volets de tuyère, conduirait à une solution idéale présentant l'allègement maximal. Cette solution pourra être retenue dans l'application à des volets d'inversion du flux secondaire dans un turboréacteur à doubleflux, par exemple. Cependant, l'utilisation de volets en métal et matériau composite, par exemple semelle 2 et moyens de fixation 11 en métal, tous les autres éléments, sauf les rivets étant en composites, conformes à l'invention apporte:

- une amélioration de l'étanchéité, les semelles acier sur acier ayant plus de souplesse et une meilleure adaptation que n'aurait une solution composite sur composite,
-- une meilleure continuité en évitant un profil accentué en »marches d'escalier« entre volets, car l'utilisation de carbone-carbone imposerait des épaisseurs plus importantes.

Dans certaines utilisations, il pourra être avantageux de conserver des divers avantages en associant des volets à semelle en métal et structure en composite (par exemple carbone-carbone) conformes à l'invention et des volets en matériau carbone-carbone intégral, par exemple un volet sur deux de chaque type.

## Revendications

1. Volet pour tuyère d'éjection à section variable comportant un corps central et une semelle, caractérisé en ce que le corps central est constitué d'une armature (3, 4, 7) en forme de triangle isocèle à sommet arrondi et de section en U, les extrémités des branches du U étant prolongées perpendiculairement par un segment de droite, ledit segment de droite déterminant un rebord intérieur (5) et extérieur (6) à ladite armature, et d'un couvercle (8), ayant la forme et les dimensions extérieures de la projection plane de l'armature (4, 4, 7) et de son rebord (6), fixé sur les rebords (5, 6); en ce que la semelle (2) est constituée d'une pièce rectangulaire comportant dans son axe une ouverture triangulaire (10) de contour correspondant au profil intérieur du rebord (6) du corps central (1), et en ce que des moyens de fixation (11) sont prévus pour maintenir le bord du corps central centre la semelle autour de l'ouverture triangulaire.

2. Volet selon la revendication 1, caractérisé en ce que les moyens de fixation (11) sont formés d'au moins un profilé de forme analogue au profil de l'ouverture (10) de la semelle (2) et présentant en section deux branches parallèles, décalées, reliées à leurs extrémités voisines par une branche transversale, ledit profilé étant fixé à la semelle.

3. Volet selon la revendication 1 ou 2, caractérisé en ce que le corps central est en un composite carbone-carbone et la semelle et les moyens de fixation, en acier.

4. Volet selon l'une des revendications 1 à 3, caractérisé en ce que la base (7) du corps central et la semelle comportent entre elles au moins une fixation (14).

5. Volets selon l'une des revendications 1 à 4, caractérisé en ce que les côtés latéraux de l'armature comportent des ouvertures (9) coaxiales prévues pour des axes d'articulation du volet et des ouvertures (9') également coaxiales pour les axes d'articulation des commandes des volets.

## Patentansprüche

1. Schubdüsensegment von veränderlichem Querschnitt mit einem Mittelkörper und einer Auflageplatte, dadurch gekennzeichnet, daß der Mittelkörper durch eine Bewehrung (3, 4, 7) in Form eines gleichschenkeligen Dreiecks mit abgerundeter Spitze und von U-förmigem Querschnitt gebildet wird, wobei die Enden der Schenkel des U senkrecht durch einen geraden Abschnitt verlängert sind, welcher gerade Abschnitt eine innere (5) und äußere (6) Leiste für die Bewehrung bestimmt, und eine Abdeckung (8), welche die Form und die äußeren Abmessungen der ebenen Projektion der Bewehrung (3, 4, 7) und ihrer Leiste (6) hat, und welche auf den Leisten (5, 6) befestigt ist; und daß die Auflageplatte (2) durch ein rechteckiges Teil gebildet ist, das in seiner Achse eine dreieckige Öffnung (10) aufweist, deren Umriß dem inneren Profil der Leiste (6) des Mittelkörpers (1) entspricht, und daß Befestigungsmittel (11) vorgesehen sind, um den Rand des Mittelkörpers gegen die Auflageplatte um die dreieckige Öffnung (10) herum zu halten.

2. Schubdüsensegment nach Anspruch 1, dadurch gekennzeichnet, daß die Befestigungsmittel (11) durch mindestens ein Profilstück gebildet sind, dessen Form analog dem Profil der Öffnung (10) der Auflageplatte (2) ist und im Schnitt zwei parallele, versetzte, an ihren benachbarten Enden durch einen Quersteg verbundene Schenkel aufweist, welches Profilstück auf der Auflageplatte befestigt ist.

3. Schubdüsensegment nach Anspruch 1 oder 2, dadurch gekennzeichnet, daß der Mittelkörper aus einem Kohlenstoff-Kohlenstoff-Verbundwerkstoff besteht und die Auflageplatte und die Befestigungsmittel aus Stahl sind.

4. Schubdüsensegment nach einem der Ansprüche 1 bis 3, dadurch gekennzeichnet, daß die Basis (7) des Mittelkörpers und die Auflage platte zwischen sich mindestens eine Befesti gung (14) aufweisen.

5. Schubdüsensegment nach einem der Ansprüche 1 bis 4, dadurch gekennzeichnet, daß die Seitenflächen der Bewehrung gleichachsige Öffnungen (9), welche für Anlenkachsen des Schubdüsensegments vorgesehen sind, und Öffnungen (9'), die ebenfalls gleichachsig sind, für die Anlenkachsen der Steuerungen der Schubdüsensegmente aufweisen.

**Claims**

1. A flap for a variable section ejection nozzle, comprising a central body and a sole-plate, characterised in that the central body is constituted by a reinforcement (3,4, 7), in the shape of an isosceles triangle with a rounded vertex, the reinforcement having a U-section, the ends of both legs of the U being extended perpendicu-larly by a segmented straight line, said segment-ed line defining an interior (5) and an exterior (6) edge to said reinforcement, and by a cover (8) having the shape and the external dimensions of the plane projection of the reinforcement (3, 4, 7) and of its exterior edge (6), the cover being fixed on to the edges (5, 6); in that the sole-plate (2) comprises a rectangular portion having along its axis a triangular opening (10) with an edge fol lowing the inner profile of said exterior edge (6) of the central body (1), and in that retaining means (11) are provided for holding the edge of the central body against the soleplate around the triangular opening (10) therein.

2. A flap according to claim 1, characterised in that the retaining means (11) comprises at least one member shaped similarly to the edge of the opening (10) in the sole-plate (2) and exhibiting, in cross-section, two staggered parallel branches, connected at their adjacent ends by a transverse arm, said member being fixed to the sole-plate.

3. A flap according to claim 1 or 2, characterised in that the central body is formed from a carbon-carbon composite and in that the sole-plate and retaining means are of steel.

4. A flap according to any one of claims 1 to 3, characterised in that a base (7) of the central body and the sole-plate (2), have between them at least one fixing means (14).

5. A flap according to any one of claims 1 to 4, characterised in that the lateral sides of the rein forcement have coaxial openings (9) intended for pivot pins of the flap, and further openings (9') also coaxial and intended for pivot pins of con trols of the flaps.

FIG.:1

FIG.:2

FIG.:3

FIG.:4

FIG.:5

7